(19) Europäisches Patentamt
European Patent Office
Office européen des brevets

(11) **EP 4 053 603 B1**

(12) **FASCICULE DE BREVET EUROPEEN**

(45) Date de publication et mention de la délivrance du brevet:
**06.12.2023 Bulletin 2023/49**

(21) Numéro de dépôt: **22159276.9**

(22) Date de dépôt: **28.02.2022**

(51) Classification Internationale des Brevets (IPC):
**G02B 5/28** $^{(2006.01)}$

(52) Classification Coopérative des Brevets (CPC):
**G02B 5/284**

(54) **EMETTEUR OPTOELECTRONIQUE A BALAYAGE ANGULAIRE RAPIDE**

OPTOELEKTRONISCHER SENDER MIT SCHNELLER WINKELABTASTUNG

OPTOELECTRONIC TRANSMITTER WITH RAPID ANGULAR SCANNING

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **02.03.2021 FR 2101993**

(43) Date de publication de la demande:
**07.09.2022 Bulletin 2022/36**

(73) Titulaire: **Commissariat à l'énergie atomique et aux énergies alternatives
75015 Paris (FR)**

(72) Inventeur: **GERARD, Jean-Michel
38054 GRENOBLE (FR)**

(74) Mandataire: **Brevalex
Tour Trinity
1 B Place de la Défense
92400 Courbevoie (FR)**

(56) Documents cités:
**US-A- 5 648 786**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

**DOMAINE TECHNIQUE**

Le domaine de l'invention est celui des émetteurs optoélectroniques adaptés à émettre un faisceau lumineux en espace libre qui effectue en champ lointain un balayage d'un secteur angulaire en un temps très court, par exemple inférieur à la nanoseconde.

**ÉTAT DE LA TECHNIQUE ANTÉRIEURE**

Il existe des émetteurs optoélectroniques permettant d'émettre en espace libre un faisceau lumineux suivant une direction principale prédéfinie. Ils trouvent une application notamment dans le domaine de la détection et de l'estimation de distance par laser (LIDAR), mais également dans les domaines des communications optiques en espace libre, des écrans holographiques et de l'imagerie médicale, entre autres.

A titre d'exemple, il peut s'agir des émetteurs optoélectroniques à antenne réseau à commande de phase (OPA, pour *Optical Phased Array,* en anglais). Les émetteurs optoélectroniques de ce type comportent habituellement une source optique d'émission d'un signal optique cohérent et monochromatique qui est ensuite distribué dans une pluralité de guides d'onde. Chaque guide d'onde comporte un déphaseur et un émetteur élémentaire formant une antenne optique. Les antennes optiques émettent un faisceau lumineux élémentaire en espace libre, par exemple par diffraction, ces faisceaux lumineux interférant ensuite entre eux pour former un faisceau lumineux principal. Celui-ci présente un diagramme de rayonnement en champ lointain dont la direction principale est fonction notamment de la phase relative appliquée par les déphaseurs aux faisceaux lumineux se propageant dans la pluralité de guides d'onde.

Pour obtenir un balayage rapide d'un secteur angulaire par le faisceau lumineux principal, par exemple un balayage d'un secteur angulaire de l'ordre de 10mrad en une durée de l'ordre de la nanoseconde voire moins, il serait nécessaire d'imposer aux faisceaux lumineux élémentaires une phase relative présentant une variation temporelle très courte. Or, ceci est particulièrement difficile voire impossible à obtenir avec des déphaseurs à effet thermo-optique ou même avec des déphaseurs à effet électro-réfractif. Par ailleurs, un tel émetteur optoélectronique nécessiterait une gestion complexe de la variation temporelle de la phase relative à imposer, et pourrait présenter une consommation énergétique importante.

Notons qu'il existe également des émetteurs optiques comportant un dispositif mécanique permettant d'effectuer le balayage angulaire, comme décrit par exemple dans le document EP2397882A1. Cependant, la vitesse de balayage reste relativement faible du fait des contraintes inhérentes aux éléments du dispositif mécanique (guidage en rotation par roulements à billes ou pivots flexibles, moteur couple, etc...). Le document US 5648786 A est pertinent pour la présente invention.

**EXPOSÉ DE L'INVENTION**

L'invention a pour objectif de remédier au moins en partie aux inconvénients de l'art antérieur, et plus particulièrement de proposer un émetteur optoélectronique permettant d'effectuer un balayage rapide d'un secteur angulaire prédéfini, en un temps de l'ordre de la nanoseconde voire moins, par un faisceau lumineux principal à divergence angulaire faible vis-à-vis de la largeur angulaire du secteur balayé.

Pour cela, l'objet de l'invention est un émetteur optoélectronique à balayage angulaire, comportant un réseau de plusieurs cavités résonantes, reposant sur un substrat définissant un plan principal, les cavités résonantes étant :

- agencées parallèlement les unes aux autres et s'étendant chacune longitudinalement suivant un premier axe du réseau,
- formées chacune d'un empilement de deux réflecteurs opposés et d'une couche intercalaire située entre les réflecteurs, et présentant une face d'émission opposée au substrat,
- adaptées chacune à émettre par la face d'émission un faisceau lumineux dit élémentaire à une fréquence de résonance $f_{r(i)}$ propre à chaque cavité résonante, en réponse à un signal optique d'excitation impulsionnel adapté à éclairer et exciter simultanément toutes les cavités résonantes,
- configurées pour présenter une variation des fréquences de résonance $f_{r(i)}$ d'une cavité résonante à l'autre, suivant un deuxième axe du réseau perpendiculaire au premier axe, le balayage angulaire de l'émetteur optoélectronique se produisant alors dans un plan perpendiculaire à celui du substrat et contenant le deuxième axe.

De plus, chaque cavité résonante présente un temps $\tau_{(i)}$ de stockage de la lumière, qui est fonction de coefficients de réflectivité des réflecteurs, d'une épaisseur et d'un indice de réfraction de la couche intermédiaire.

L'émetteur optoélectronique comporte également une source optique adaptée à émettre ledit signal optique d'excitation impulsionnel de manière à éclairer et à exciter simultanément toutes les cavités résonantes. Ce signal impulsionnel est un signal cohérent, d'une durée d'impulsion $\Delta t_e$ inférieure au temps $\tau_{(i)}$ de stockage de la lumière de chacune des cavités résonantes, et d'une largeur spectrale $\Delta f_e$ centrée sur une fréquence centrale $f_e$, $\Delta f_e$ et $f_e$ étant prédéfinies de manière à couvrir la gamme des fréquences de résonance $f_{r(i)}$ des cavités résonantes.

Certains aspects préférés mais non limitatifs de cet émetteur optoélectronique sont les suivants.

Les cavités résonantes peuvent être configurées de sorte que la variation des fréquences de résonance $f_{r(i)}$ est monotone.

La variation des fréquences de résonance $f_{r(i)}$ peut résulter d'une variation suivant le deuxième axe du réseau : d'une épaisseur des couches intercalaires, d'une cavité résonante à l'autre, l'épaisseur étant définie suivant un axe perpendiculaire au plan principal, et/ou d'un indice de réfraction des couches intercalaires, d'une cavité résonante à l'autre.

Les cavités résonantes peuvent être des plots distincts les uns des autres répartis sur le substrat et délimités chacun par des flancs latéraux sensiblement perpendiculaires au substrat.

La variation des fréquences de résonance $f_{r(i)}$ peut également résulter d'une variation suivant le deuxième axe du réseau d'une largeur des cavités résonantes suivant le deuxième axe du réseau.

En variante, les cavités résonantes peuvent être des zones d'un même empilement formé des réflecteurs et de la couche intercalaire, l'empilement étant recouvert par une couche mince opaque à la longueur d'onde des faisceaux lumineux élémentaires, la couche mince optique comportant des ouvertures traversantes définissant une surface d'émission des cavités résonantes.

Les cavités résonantes peuvent présenter une largeur $L_y$ suivant le deuxième axe du réseau et une longueur $L_x$ suivant le premier axe du réseau, la longueur $L_x$ et la largeur $L_y$ étant respectivement supérieure et inférieure à une dimension latérale $d_m$ d'un mode résonant dans une cavité résonante planaire de dimensions infinies dans le plan principal, la dimension latérale $d_m$ étant prédéfinie en fonction d'une longueur d'onde de résonance d'une cavité résonante de référence du réseau, de l'épaisseur et de l'indice de réfraction de sa couche intermédiaire, et des coefficients de réflectivité des deux réflecteurs.

Les cavités résonantes peuvent être réalisées à base de composés diélectriques ou semiconducteurs III-V. Par ailleurs, les réflecteurs peuvent être des miroirs de Bragg.

La couche intercalaire d'une cavité résonante centrale du réseau peut présenter une épaisseur égale à $k \times \lambda_{r(0)}/2n$, où k est un entier, $\lambda_{r(ic)}$ est la longueur d'onde de résonance de la cavité résonante centrale, et n est l'indice de réfraction de la couche intercalaire correspondante. Une cavité résonante centrale est une cavité résonante située au centre du réseau.

L'émetteur optoélectronique peut présenter une vitesse angulaire de balayage prédéfinie en fonction d'un écart entre les fréquences de résonance de deux cavités résonantes adjacentes, d'une longueur d'onde de résonance d'une cavité résonante centrale du réseau, et d'un pas d'agencement spatial des cavités résonantes suivant le deuxième axe du réseau.

L'émetteur optoélectronique peut présenter une largeur d'un secteur angulaire balayé par le faisceau lumineux principal prédéfinie en fonction d'une longueur d'onde de résonance d'une cavité résonante centrale du réseau et d'une largeur des cavités résonantes suivant le deuxième axe du réseau.

L'émetteur optoélectronique peut présenter une largeur angulaire du faisceau lumineux principal prédéfinie en fonction de la largeur du secteur angulaire et d'un nombre total des cavités résonantes.

L'émetteur optoélectronique peut présenter une période de balayage d'un secteur angulaire prédéfinie en fonction d'un écart entre les fréquences de résonance de deux cavités résonantes adjacentes. La période de balayage est ici la durée entre deux instants successifs où le faisceau lumineux principal passe par $\theta=0°$. En effet, le faisceau lumineux dit principal est défini à t=0 et en $\theta=0°$. Il balaie tout le secteur angulaire en une certaine durée. Alors qu'il continue son balayage du secteur angulaire, un autre faisceau lumineux est généré en $\theta=0°$ et commence son balayage. Il devient alors le faisceau lumineux principal et le faisceau lumineux précédent devient secondaire.

L'invention porte également sur un procédé de fabrication d'un émetteur optoélectronique selon l'une quelconque des caractéristiques précédentes, dans lequel la variation des fréquences de résonance est induite par une variation d'épaisseur de la couche intercalaire des cavités résonantes suivant le deuxième axe du réseau, le procédé comportant une étape de réalisation d'un empilement destiné à former le réseau de cavités résonantes, l'empilement étant réalisé dans un réacteur, sur une platine, à partir d'une position qui est décalée latéralement vis-à-vis d'un axe de rotation de la platine par rapport à une position de référence pour laquelle l'épaisseur de la couche intercalaire présente une épaisseur uniforme.

## BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :

la figure 1 est une vue schématique et partielle, en coupe, d'un émetteur optoélectronique à balayage angulaire selon un mode de réalisation ;

les figures 2A et 2B sont des vues en perspective, schématiques et partielles, de deux configurations différentes du réseau de cavités résonantes de l'émetteur optoélectronique selon un mode de réalisation, c'est-à-dire en configuration structurée (fig.2A) et en configuration planaire non structurée (fig.2B) ;

les figures 3A à 3C sont des exemples d'évolution temporelle du diagramme de rayonnement en champ lointain d'une ou plusieurs cavités résonantes en configuration structurée (cf. fig.2A), pour une cavité résonante unique (fig.3A), pour un réseau de cavités résonantes sans variation de la fréquence de résonance d'une cavité résonante à l'autre (fig.3B), et pour un réseau de cavités résonantes avec une variation de la fréquence de résonance d'une cavité résonante à l'autre (fig.3C) ;

les figures 4A à 4C sont des exemples d'évolution temporelle du diagramme de rayonnement en champ lointain d'une ou plusieurs cavités résonantes en configuration planaire non structurée (cf. fig.2B), pour une cavité résonante unique (fig.4A), pour un réseau de cavités résonantes sans variation de la fréquence de résonance d'une cavité résonante à l'autre (fig.4B), et pour un réseau de cavités résonantes avec une variation de la fréquence de résonance d'une cavité résonante à l'autre (fig.4C) ;

la figure 5A est une vue en coupe, schématique et partielle, d'un réacteur d'épitaxie par jets moléculaires (MBE) illustrant le positionnement d'un substrat de croissance permettant de réaliser une couche intercalaire présentant une variation monotone de son épaisseur ;

la figure 5B est une vue en coupe, schématique et partielle, d'un réseau de cavités résonantes selon une configuration structurée (cf. fig.2A), pour lesquelles l'épaisseur de la couche intercalaire présente une variation monotone suivant un axe du réseau.

## EXPOSÉ DÉTAILLÉ DE MODES DE RÉALISATION PARTICULIERS

Sur les figures et dans la suite de la description, les mêmes références représentent les éléments identiques ou similaires. De plus, les différents éléments ne sont pas représentés à l'échelle de manière à privilégier la clarté des figures. Par ailleurs, les différents modes de réalisation et variantes ne sont pas exclusifs les uns des autres et peuvent être combinés entre eux. Sauf indication contraire, les termes « sensiblement », « environ », « de l'ordre de » signifient à 10% près, et de préférence à 5% près. Par ailleurs, les termes « compris entre ... et ... » et équivalents signifient que les bornes sont incluses, sauf mention contraire.

L'invention porte sur un émetteur optoélectronique permettant d'émettre un faisceau lumineux principal de faible divergence angulaire, suivant une direction principale prédéfinie en champ lointain qui effectue un balayage rapide d'un secteur angulaire donné, en un temps très court, par exemple de l'ordre de la nanoseconde voire moins. Autrement dit, l'émetteur optoélectronique est adapté à émettre un faisceau lumineux dont le diagramme de rayonnement en champ lointain montre au moins un pic d'intensité suivant une direction principale qui varie dans le temps.

On appelle « diagramme de rayonnement en champ lointain » la répartition angulaire du faisceau lumineux principal en champ lointain émis par l'émetteur optoélectronique. Ce faisceau lumineux principal est formé par interférence entre les faisceaux lumineux élémentaires émis par un réseau de cavités optiques résonantes. Le diagramme de rayonnement en champ lointain de l'émetteur optoélectronique se distingue ainsi des diagrammes de rayonnement en champ proche des cavités résonantes (émetteurs élémentaires). Le champ lointain (zone de Fraunhofer) correspond à une distance $D_{cl}$ supérieure à deux fois le rapport entre le carré d'une grande dimension L de la taille globale de l'émetteur optoélectronique sur la longueur d'onde de résonance $\lambda_r$ d'une cavité résonante, autrement dit : $D_{cl} > 2 \times L^2 / \lambda_r$.

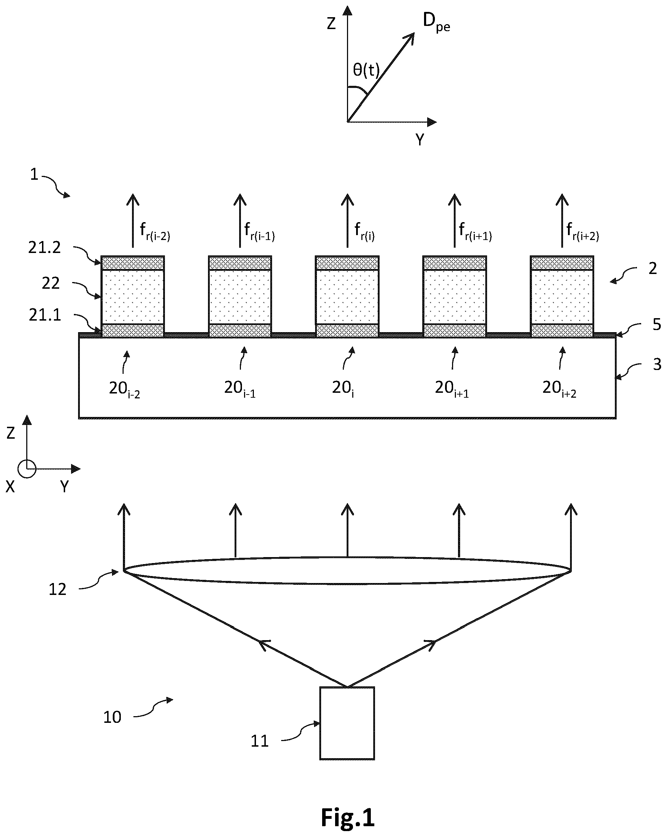

La figure 1 est une vue schématique et partielle, en coupe transversale, d'un émetteur optoélectronique 1 selon un premier mode de réalisation.

On définit ici et pour la suite de la description un repère direct tridimensionnel orthogonal XYZ, où les axes X et Y forment un plan parallèle au plan principal du substrat 3 sur lequel repose un réseau 2 de cavités résonantes $20_i$, et où l'axe Z est orienté suivant l'épaisseur des cavités résonantes $20_i$ et suivant la direction d'émission des cavités résonantes $20_i$. Dans la suite de la description, les termes « inférieur » et « supérieur » s'entendent comme étant relatifs à un positionnement croissant suivant la direction +Z.

D'une manière générale, l'émetteur optoélectronique 1 selon l'invention comporte un réseau 2 de cavités optiques résonantes $20_i$ reposant sur un substrat 3. Les cavités résonantes $20_i$ sont agencées parallèlement les unes aux autres et s'étendent chacune longitudinalement suivant un premier axe du réseau (ici l'axe X). Elles sont référencées par l'indice i allant de -M à M, avec M≥1. Le réseau comporte N cavités, où N est égal à 2M ou 2M+1 selon que N est pair ou impair. Chaque cavité résonante $20_i$ est formée d'un empilement de deux réflecteurs opposés 21.1, 21.2 et d'une couche intercalaire 22 située entre les réflecteurs 21.1, 21.2, et présente une face d'émission opposée au substrat 3. Elles sont adaptées chacune à émettre par la face d'émission, en réponse à un signal optique d'excitation, un faisceau lumineux dit élémentaire à une fréquence de résonance $f_{r(i)}$ propre à chaque cavité résonante $20_i$. De plus, elles sont configurées pour présenter une variation, de préférence monotone, des fréquences de résonance $f_{r(i)}$ suivant un deuxième axe du réseau (ici l'axe Y) perpendiculaire au premier axe X. Le balayage angulaire de l'émetteur optoélectronique 1 se produit alors dans un plan perpendiculaire à celui du substrat 3 et contenant le deuxième axe Y.

Une source optique 10 est adaptée à émettre le signal optique d'excitation de manière à éclairer et exciter simultanément toutes les cavités résonantes $20_i$. Notons que les cavités résonantes $20_i$ dont il s'agit ici sont les cavités destinées à être éclairées et excitées par le signal optique d'excitation. Le réseau peut comporter davantage de cavités résonantes que les N cavités résonantes $20_i$ en question. Le signal optique d'excitation est formé d'impulsions laser présentant chacune une largeur spectrale $\Delta f_e$ centrée sur une fréquence centrale $f_e$, la largeur spectrale $\Delta f_e$ et la fréquence centrale $f_e$ étant prédéfinies de manière à couvrir la gamme des fréquences de résonance $f_{r(i)}$.

Aussi, la source optique 10 émet un signal optique d'excitation (faisceau lumineux de pompe) qui éclaire et excite toutes les cavités résonantes $20_i$ de manière simultanée. En réponse, les cavités résonantes $20_i$ émettent chacune un faisceau lumineux élémentaire suivant l'axe vertical Z (angle d'inclinaison θ=0°). Du fait de la variation de la fréquence de résonance $f_{r(i)}$ d'une cavité résonante $20_i$ à l'autre, un déphasage apparaît entre les faisceaux lumineux élémentaires. Aussi, en champ lointain, un faisceau lumineux principal se forme par interférence entre les faisceaux lumineux élémentaires, lequel présente un angle d'inclinaison θ(t) vis-à-vis de l'axe vertical Z qui varie dans le temps. Le faisceau lumineux principal balaie alors un secteur angulaire prédéfini en un temps réduit, de manière répétitive, à mesure que l'intensité du faisceau lumineux principal décroît.

La source optique 10 est ainsi adaptée à émettre un signal optique d'excitation (faisceau lumineux de pompe) permettant d'éclairer et d'exciter simultanément toutes les cavités résonantes $20_i$. Le signal optique d'excitation est un signal cohérent, c'est-à-dire spatialement et temporellement cohérent. Ainsi, l'excitation simultanée des cavités optiques $20_i$ par le signal optique d'excitation cohérent conduit à l'émission des faisceaux lumineux élémentaires, lesquels seront alors en mesure d'interférer les uns avec les autres pour former en champ lointain le faisceau lumineux principal.

De plus, le signal optique d'excitation prend la forme d'impulsions laser de largeur spectrale $\Delta f_e$ centrée sur une fréquence centrale $f_e$. La durée de chaque impulsion laser ($\Delta t_e \sim 1/\Delta f_e$) peut être de l'ordre de la femtoseconde à la nanoseconde. De manière connue, la durée d'une impulsion laser est définie comme la largeur à mi-hauteur (FWHM pour *full width at half-maximum* en anglais) de l'évolution de la puissance optique du laser en fonction du temps.

Enfin, la durée $\Delta t_e$ de chaque signal optique d'excitation impulsionnel, c'est-à-dire de chaque impulsion laser, est inférieure au temps de stockage $\tau_i$ de la lumière de chaque cavité résonante $20_i$ : $\Delta t_e < \tau_i$, et de préférence est inférieure au moins 10 fois inférieur au temps de stockage $\tau_i$. Comme décrit en détail plus loin, le temps de stockage $\tau_i$ dépend du facteur de qualité Q et de la longueur d'onde de résonance $\lambda_{r(i)}$ de la cavité $20_i$ : $\tau_i = Q \times \lambda_{r(i)} / (2\pi \times c)$, où c est la vitesse de la lumière dans le vide. Par ailleurs, le facteur de qualité Q est défini par la relation (2) indiquée plus loin. Le fait que la durée $\Delta t_e$ des impulsions laser soit inférieure aux temps de stockage $\tau_i$ des cavités résonante $20_i$ traduit le fait qu'en fonctionnement, l'impulsion laser injecte de la lumière dans les cavités résonantes $20_i$ de manière simultanée, puis les cavités $20_i$ réémettent la lumière sous la forme des faisceaux lumineux élémentaires qui interfèrent ensuite en champ lointain pour former le faisceau lumineux principal (qui effectue le balayage angulaire).

La largeur spectrale $\Delta f_e$ et la fréquence centrale $f_e$ sont prédéfinies de manière à couvrir la gamme des fréquences de résonance $f_{r(i)}$, c'est-à-dire que l'éclairement des cavités résonantes $20_i$ se traduit par une injection de lumière dans les cavités résonantes $20_i$ et donc par une excitation de ces dernières. Pour cela, la fréquence centrale $f_e$ est de préférence choisie égale à la moyenne des fréquences de résonance $f_r$ des cavités résonantes $20_i$, autrement dit : $f_e = \text{moy}(f_{r(i)})_{i=-M, M}$. De plus, la largeur spectrale $\Delta f_e$ est au moins égale à la largeur $G_r = |f_{r(M)}-f_{r(-M)}|$ de la gamme de fréquences de résonance des cavités résonantes $20_i$, c'est-à-dire au moins égale à $2M \times \Delta$ où $\Delta$ est l'écart entre les fréquences de résonance $f_{r(i)}$, $f_{r(i+1)}$ des cavités résonantes adjacentes. De préférence, la largeur spectrale $\Delta f_e$ est comprise entre $G_r$ et $3 \times G_r$. Aussi, la durée $\Delta t_e$ des impulsions laser est inférieure ou égale à l'inverse de $2M \times \Delta$ : $\Delta t_e \leq 1/(2M \times \Delta)$.

Il en résulte donc que la source laser est configurée pour que la durée $\Delta t_e$ des impulsions laser vérifie deux conditions, à savoir : $\Delta t_e < \tau_i$ d'une part, et $\Delta t_e \leq 1/(2M \times \Delta)$ d'autre part. Selon les exemples numériques indiqués plus loin, $\tau_i$ peut être égale à 200ps, de sorte que la première condition donne : $\Delta t_e < 200$ps et de préférence $\Delta t_e < 20$ps. Par ailleurs, $2M \times \Delta$ peut être égal à 90GHz, de sorte que la deuxième condition est plus contraignante : $\Delta t_e \leq 11$ps, et permet de vérifier de facto la première condition.

Notons par ailleurs qu'il est préférentiel que le faisceau lumineux principal balaie le secteur angulaire une fois par impulsion laser, ce qui se traduit par le fait que le temps de stockage $\tau_i$ est égal à $1/\Delta$. En effet, comme indiqué plus loin, la période de balayage $T_\theta$ (durée entre deux instants successifs où le faisceau principal passe par θ=0°) est égale à 1/Δ. Ainsi, la deuxième condition $\Delta t_e \leq 1/(2M \times \Delta)$ devient $\Delta t_e \leq \tau_i/2M$, ce qui satisfait automatiquement la condition $\Delta t_e < \tau_i$.

Dans cet exemple, la source optique 10 comporte une source laser 11, par exemple, dans le cas d'une émission dans le domaine du proche infrarouge (entre 0.7 et 2μm), de type à cavité verticale émettant par la surface (VCSEL, pour *Vertical-Cavity Surface Emitting Laser*, en anglais), voire de type à émission par la tranche (EEL, pour *Edge Emitting Laser*, en anglais). Notons que la source optique 10 peut être réalisée de manière monolithique avec la structure formée du substrat 3 et du réseau 2 de cavités résonantes $20_i$, ou peut être un élément distinct de cette structure et couplée à celle-ci par un montage optique.

La source optique 10 peut également comporter des éléments optiques de mise en forme du signal optique d'excitation émis par la source laser 11, par exemple ici un expanseur de faisceau associé à une lentille de collimation 12. Ainsi, on élargit la dimension latérale du signal optique d'excitation de manière à éclairer simultanément toutes les cavités résonantes $20_i$. De plus, la source optique 10 peut comporter un élément optique adapté à rendre constante la distribution angulaire de l'intensité du faisceau lumineux de pompe, pour obtenir un profil plat d'intensité, et non plus un profil gaussien. Bien entendu, ces différents éléments optiques peuvent être distincts ou confondus. Dans cet exemple, on a représenté une lentille de collimation 12 (configuration en optique en espace libre), mais cette lentille et ces différents éléments optiques peuvent présenter une configuration en optique guidée, et être par exemple un réseau de matrices de diffraction, intégré sur un substrat et couplé optiquement à la source laser 11.

Dans cet exemple, le signal optique d'excitation est émis en direction du réseau 2 de cavités résonantes $20_i$ au travers du substrat 3, lequel est alors transparent à la longueur d'onde $\lambda_e$ du signal optique d'excitation. Le signal optique d'excitation est de préférence orienté de manière orthogonale au substrat 3 (suivant l'axe Z). En variante, il peut être incliné par rapport à ce dernier mais contenu dans un plan orthogonal au premier axe X du réseau des cavités résonantes $20_i$ de sorte que chaque cavité résonante est éclairée de manière uniforme sur toute sa longueur. Il peut également être incliné mais contenu dans un plan orthogonal au deuxième axe Y du réseau des cavités résonantes $20_i$, ce qui se traduit par une modification de l'angle d'émission de chaque faisceau élémentaire et donc du plan dans lequel le balayage en champ lointain se produit.

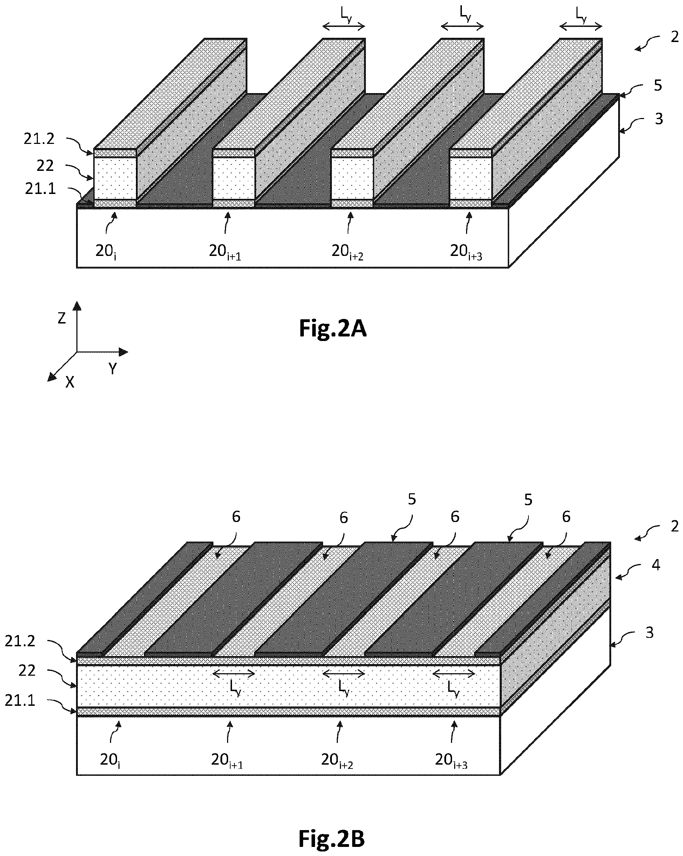

Dans le cas d'un éclairement en face arrière, une couche antireflet (non représentée) peut être disposée sur la face arrière du substrat 3, ou entre le substrat 3 et les cavités résonantes $20_i$, et les réflectivités des réflecteurs 21.1 et 21.2 sont de préférence identiques. En variante, les cavités résonantes $20_i$ peuvent être éclairées en face avant par le signal optique d'excitation, la face avant du substrat 3 étant celle où reposent les cavités résonantes $20_i$. Dans ce cas, le signal optique d'excitation est incliné par rapport à l'axe Z et peut être contenu dans le plan XZ. Le réflecteur 21.1 peut alors avoir une réflectivité très élevée de sorte que les cavités résonantes $20_i$ ne rayonnent que d'un côté (celui de la direction +Z). Dans cette variante, les cavités résonantes $20_i$ présentent de préférence la configuration structurée décrite plus loin en référence à la fig.2A, de sorte que le mode résonant dans chaque cavité résonante $20_i$ est bien défini latéralement et est guidé verticalement.

L'émetteur optoélectronique 1 comporte un réseau 2 de cavités résonantes $20_i$, reposant sur un substrat 3. Elles s'étendent longitudinalement suivant le premier axe X du réseau, et sont agencées parallèlement les unes aux autres dans le plan XY. Par parallèlement, on entend que les cavités résonantes $20_i$ s'étendent longitudinalement dans le plan XY en présentant une inclinaison relative nulle, entre deux cavités résonantes adjacentes, voire inférieures à quelques degrés. Les cavités résonantes $20_i$ sont adaptées à émettre chacune, en réponse au signal optique d'excitation, un faisceau lumineux élémentaire à une fréquence résonance $f_{r(i)}$, et sont configurées de sorte qu'elles présentent une variation de la fréquence de résonance $f_{r(i)}$ d'une cavité résonante $20_i$ à l'autre, suivant le deuxième axe Y du réseau, ce deuxième axe Y étant contenu dans le plan XY et perpendiculaire au premier axe X.

Les cavités résonantes $20_i$ sont des cavités optiques de type Fabry-Pérot, et sont formées chacune d'au moins une couche intercalaire 22 située entre deux réflecteurs 21.1, 21.2, ici deux miroirs de Bragg, reposant sur le substrat 3. Elles présentent une face d'émission principale du faisceau lumineux élémentaire, cette face d'émission étant opposée au substrat 3.

Le substrat 3 est un support sur lequel repose le réseau 2 de cavités résonantes $20_i$. Il est formé d'une couche principale épaisse, de préférence rigide, réalisée en un ou plusieurs matériaux. La couche principale peut être une plaque semiconductrice (*wafer*, en anglais) présentant par exemple une épaisseur d'une à plusieurs centaines de microns. Elle peut ici être réalisée en un composé semiconducteur cristallin, par exemple ici en GaAs. Dans cet exemple où le signal optique d'excitation est transmis au travers du substrat 3, celui-ci est réalisé en un matériau transparent à la longueur d'onde d'excitation. Autrement dit, le matériau du substrat 3 présente un taux de transmission à la longueur d'onde d'excitation au moins égal à 50%, de préférence au moins égal à 90%, voire davantage. Dans le cas d'un éclairement en face arrière, une couche antireflet (non représentée) peut être disposée sous les cavités résonantes.

Les miroirs de Bragg 21.1, 21.2 sont de préférence identiques d'une cavité résonante $20_i$ à l'autre, en termes de composition et d'épaisseur. Ils peuvent être formés d'une alternance de couches diélectriques ou semiconductrices quart d'onde ayant respectivement un indice de réfraction élevé et un indice de réfraction faible. Les couches quart d'onde peuvent être réalisées, à titre purement illustratif, à partir des composés semiconducteurs GaAs et AlAs, et de leurs alliages. Les composés semiconducteurs peuvent être amorphes ou cristallins. Elles peuvent également être réalisées par exemple à partir de SiO$_2$ et de TiO$_2$.

La couche intercalaire 22 est réalisée en un matériau non absorbant à la longueur d'onde du faisceau lumineux élémentaire émis par la cavité résonante 20$_i$ correspondante. Autrement dit, la couche intercalaire 22 présente un taux d'absorption très faible à cette longueur d'onde, de sorte que les pertes induites dans la couche intercalaire 22 sont négligeables par rapport aux pertes intrinsèques de la cavité résonante 20$_i$ dues notamment à la transmission des réflecteurs 21.1 et 21.2. Le matériau de la couche intercalaire 22 peut être un matériau diélectrique, par exemple un empilement de type SiO$_2$/TiO$_2$, ou un matériau semiconducteur cristallin par exemple de type IV, III-V ou II-VI. A titre d'exemple, la couche intercalaire 22 peut être réalisée en GaAs. La couche intercalaire 22 peut être réalisée en un même matériau (et donc en une seule couche), ou être formée d'un empilement de différents matériaux. Par ailleurs, elle présente un indice de réfraction n$_{(i)}$ et une épaisseur e$_{(i)}$ suivant l'axe Z. Dans le cas où la couche intercalaire 22 est réalisée en plusieurs matériaux (sans interface à saut d'indice important), l'indice de réfraction n$_{(i)}$ peut être un indice moyen défini par une moyenne (par ex. arithmétique) des indices des différentes couches pondérés par leurs épaisseurs.

L'épaisseur e$_{(i)}$ est de préférence constante suivant le premier axe X du réseau (suivant la longueur L$_x$, dans le cas où les cavités résonantes sont semi-infinies). Elle peut varier suivant le deuxième axe Y du réseau, comme décrit plus loin. L'épaisseur e$_{(i)}$ est choisie autour de k×λ$_{r(0)}$/2n, où k est un entier, λ$_{r(0)}$ est la longueur d'onde d'une cavité résonante 20$_i$ de rang i=0 (cavité centrale située au centre du réseau), et n est l'indice de réfraction de la couche intercalaire 22. Comme indiqué plus loin, l'entier k est de préférence choisi égal à plusieurs dizaines, par exemple égal à 30 environ, ou à 60 ou 70 environ, ceci pour augmenter le facteur de qualité des cavités résonantes 20$_i$.

Chaque cavité résonante 20$_i$ présente des dimensions longitudinale et transversale dans le plan XY, ici une longueur L$_x$ suivant le premier axe X du réseau, et une largeur L$_y$ suivant le deuxième axe Y du réseau, et une épaisseur e$_{(i)}$ suivant l'axe Z. Les longueur L$_x$ et largeur L$_y$ sont de préférence identiques d'une cavité résonante 20$_i$ à l'autre.

Comme représenté sur les figures 2A et 2B, le réseau 2 de cavités résonantes 20$_i$ est de préférence un réseau monodimensionnel dans le sens où la longueur L$_x$ est bien supérieure à la largeur L$_y$ (cavités résonantes 20$_i$ semi-infinies). En variante (non représentée), le réseau peut être bidimensionnel dans le sens où les cavités résonantes 20$_i$ sont agencées les unes par rapport aux autres suivant les axes X et Y.

Les longueur L$_x$ et largeur L$_y$ sont prédéfinies en fonction d'une dimension latérale d$_m$ d'un mode résonant d'une cavité Fabry-Pérot planaire (i.e. de dimensions infinies dans le plan XY). Plus précisément, la largeur L$_y$ est inférieure à cette dimension latérale d$_m$, et la longueur L$_x$ est ici supérieure à cette dimension latérale d$_m$, voire au moins égale à 5×d$_m$, voire au moins égale à 10×d$_m$, voire davantage, et supérieure à l'épaisseur e$_{(i)}$, voire au moins égale à 5×e$_{(i)}$, voire au moins égale à 10×e$_{(i)}$, voire davantage. Dans le cas d'un réseau bidimensionnel, la longueur L$_x$ serait alors également inférieure à la dimension latérale d$_m$.

La dimension latérale d$_m$ du mode résonant dans une cavité optique planaire (de dimensions infinies dans le plan XY) de type Fabry-Pérot dépend des coefficients de réflexion R$_1$ et R$_2$ des réflecteurs, de l'épaisseur e, de l'indice de réfraction n de la couche intercalaire 22, et de la longueur d'onde de résonance λ$_r$ (avec λ$_r$ = c/f$_r$, avec c la vitesse de la lumière dans le vide). Ici, l'épaisseur e et la longueur d'onde λ$_r$ peuvent correspondre à celles d'une cavité résonante de référence 20$_{ir}$ du réseau, par exemple de la cavité centrale 20$_{i=0}$. La dimension latérale d$_m$ peut être déterminée à partir de l'expression indiquée dans le document Benisty et al intitulé Impact of Planar Microcavity Effects on Light Extraction - Part I: Basic Concepts and Analytical Trends, IEEE J. Quantum Electron. Vol.34, pp.1612-1631, 1998 :

$$d_m = \sqrt{\frac{\pi \lambda_r e}{2n} \frac{1}{1 - \frac{R_1 + R_2}{2}}} \quad (1)$$

Ainsi, le mode résonant supporté par chaque cavité résonante 20$_i$ est ici confiné principalement suivant le deuxième axe Y du réseau et non pas suivant le premier axe X (les cavités résonantes 20$_i$ sont dites unidimensionnelles).

Par ailleurs, pour que les fréquences de résonance f$_{r(i)}$ varient de manière monotone d'une cavité résonante 20$_i$ à l'autre, les cavités résonantes 20$_i$ présentent une variation d'une même propriété physique d'intérêt, cette propriété physique étant une propriété des cavités résonantes 20$_i$ qui participe à définir la fréquence de résonance f$_r$. La propriété d'intérêt peut être choisie parmi l'épaisseur e et/ou l'indice de réfraction n de la couche intercalaire 22, et/ou la largeur L$_y$ de la cavité résonante 20$_i$.

Dans l'exemple de la fig.1, la propriété physique d'intérêt est l'épaisseur e$_{(i)}$ des cavités résonantes 20$_i$. L'épaisseur e$_{(i)}$ varie d'une cavité résonante 20$_i$ à l'autre, de manière continue voire par paliers. Autrement dit, dans le cas d'une variation continue, l'épaisseur e$_{(i)}$ peut varier selon un gradient ∇$_y$e$_{(i)}$ suivant le deuxième axe Y du réseau, lequel peut être constant. Aussi, l'épaisseur e(y) varie au sein de chaque cavité résonante 20$_i$ suivant le deuxième axe Y du réseau. Dans ce cas, on considère que l'épaisseur e$_{(i)}$ associée à la cavité résonante 20$_i$ d'indice i est la valeur moyenne de son épaisseur e(y). Bien entendu, d'autres définitions de l'épaisseur e$_{(i)}$ sont possibles, comme par exemple la valeur minimale ou maximale que présente l'épaisseur e(y) dans la cavité résonante considérée. Par ailleurs, dans le cas d'une variation par paliers, l'épaisseur e(y) peut présenter une valeur constante suivant le deuxième axe Y du réseau au sein d'une cavité résonante, cette valeur constante variant d'une cavité résonante $20_i$ à l'autre.

La variation de la propriété physique d'intérêt des cavités résonantes $20_i$, par exemple ici de l'épaisseur $e_{(i)}$, est une variation de préférence monotone, par exemple croissante ou strictement croissante. Par ailleurs, l'écart relatif que présente la propriété physique d'intérêt, ici l'épaisseur $e_{(i)}$, entre deux cavités résonantes $20_i$ adjacentes i et i+1 est faible, dans la mesure où l'écart relatif souhaité de fréquence de résonance $f_{r(i)}$ d'une cavité résonante $20_i$ à l'autre est faible, par exemple de l'ordre de 1% voire moins, par exemple inférieur ou égal à 0.1%, voire à 0.01%, voire à 0.005%. A titre d'exemple, l'écart $\Delta$ entre les fréquences de résonance $f_{r(0)}$, $f_{r(i)}$ de deux cavités résonantes $20_i$ adjacentes de rang 0 et 1 peut être égal à 5 GHz, et la fréquence de résonance $f_{r(0)}$ peut être égal à $3 \times 10^5$ GHz, ce qui conduit à un écart relatif $\Delta/f_{r(0)}$ inférieur à 0.002%. Dans le cas où la propriété physique d'intérêt est l'épaisseur $e_{(i)}$ de la couche intercalaire 22, et où elle varie au sein de chaque cavité résonante $20_i$ suivant le deuxième axe Y du réseau, l'écart relatif est suffisamment faible pour que l'on considère que les deux miroirs de Bragg 21.1, 21.2 sont parallèles l'un à l'autre.

La figure 2A est une vue en perspective, schématique et partielle, d'un réseau 2 de cavités résonantes $20_i$ reposant sur un substrat 3, selon une première variante de réalisation, dans laquelle le réseau présente une configuration dite structurée. Les cavités résonantes $20_i$ ont en effet été obtenues par gravure localisée d'une couche initiale, et forment des plots distincts les uns des autres dans le plan XY. Dans cet exemple, les cavités résonantes $20_i$ présentent une variation de l'épaisseur de la couche intercalaire 22 suivant le deuxième axe Y du réseau. Cependant, par souci de clarté, cette variation d'épaisseur n'est pas représentée.

Dans cette configuration structurée, les cavités résonantes $20_i$ sont des plots distincts les uns des autres, c'est-à-dire qu'ils sont physiquement séparés dans le plan XY. Chaque cavité résonante $20_i$ présente un flanc latéral orienté de manière sensiblement verticale, de sorte que les miroirs de Bragg 21.1, 21.2 et la couche intercalaire 22 présentent les mêmes longueur $L_x$ et largeur $L_y$. La couche intercalaire 22 présente ici une épaisseur e(x,y) qui est constante suivant le premier axe X, et qui varie suivant le deuxième axe Y du réseau. Les couches intercalaires 22 ont été obtenues par gravure localisée d'une couche initiale. L'épaisseur e(x,y) de cette couche initiale est constante suivant le premier axe X du réseau, et présente un gradient $\nabla_y e(x,y)$ constant suivant le deuxième axe Y.

Les cavités résonantes $20_i$ sont agencées spatialement suivant le deuxième axe Y du réseau, de manière périodique, avec un pas P. A titre d'exemple, les cavités résonantes $20_i$ présentent une largeur $L_y$ égale à $20\mu m$ environ et sont agencées selon un pas P égal à $40\mu m$ environ. Notons que, d'une manière générale, l'agencement des cavités résonantes $20_i$ peut être périodique ou non.

Dans cet exemple, dans la mesure où le signal optique d'excitation est transmis par le substrat 3 suivant la direction +Z, la surface du substrat 3 située entre les cavités résonantes $20_i$ est revêtue par une couche mince opaque 5 au signal optique d'excitation. Par opaque, on entend que la couche mince est réalisée en un matériau absorbant ou réfléchissant à la longueur d'onde des impulsions laser. A titre d'exemple, la couche mince opaque 5 peut être réalisée en or.

Les cavités résonantes $20_i$ présentent ici un facteur de qualité Q très élevé, par exemple de l'ordre de 100000 voire davantage, qui est de préférence sensiblement identique d'une cavité résonante $20_i$ à l'autre. Aussi, le diagramme de rayonnement en champ lointain de chaque cavité résonante $20_i$ est très étroit autour de la direction d'émission (ici l'axe Z) du faisceau lumineux élémentaire. Le facteur de qualité Q peut être déterminé à partir de la relation suivante (ou équivalent au coefficient multiplicateur près) :

$$Q = \frac{2ne_i}{\lambda_{r(i)}} \frac{4\pi}{(2 - R_1 - R_2)} \quad (2)$$

Par ailleurs, le temps de stockage $\tau$ de la lumière dans la cavité résonante $20_i$ est proportionnel au facteur de qualité Q. Il exprime le fait que l'énergie lumineuse E(t) stockée dans une cavité résonante $20_i$ décroît de manière exponentielle en $e^{-t/\tau}$. Aussi, un facteur de qualité Q de l'ordre de 100000 correspond à un temps de stockage $\tau$ de l'ordre de quelques dizaines ou centaines de picosecondes. Le temps de stockage $\tau$ est proportionnel au facteur de qualité Q par la relation suivante (ou équivalent au coefficient multiplicateur près) :

$$\tau_i = Q \frac{\lambda_{r(i)}}{2\pi c} = \frac{4}{c} \frac{ne_i}{(2 - R_1 - R_2)} \quad (3)$$

La figure 2B est une vue en perspective, schématique et partielle, d'un réseau 2 de cavités résonantes $20_i$ reposant sur le substrat 3, selon une deuxième variante de réalisation, dans laquelle le réseau présente une configuration planaire bidimensionnelle non structurée.

Le réseau 2 de cavités résonantes $20_i$ se distingue ici de celui illustré sur la fig.2A en ce que les cavités

résonantes $20_i$ sont des zones distinctes d'un empilement 4 non structuré. Autrement dit, un empilement 4 continu, c'est-à-dire non structuré par gravure localisée, comporte les deux miroirs de Bragg 21.1, 21.2 et la couche intercalaire 22. L'empilement planaire 4 peut présenter une longueur égale à $L_x$ suivant le premier axe X et une largeur $L_y$ suivant le deuxième axe Y de l'ordre de P×N. Une couche mince opaque 5 recouvre partiellement le miroir de Bragg supérieur 21.2, et comporte des ouvertures traversantes 6 qui délimitent les cavités résonantes $20_i$ dans le plan XY.

Autrement dit, les ouvertures traversantes 6 présentent une longueur $L_x$ et une largeur $L_y$. Elles sont agencées ici de manière périodique au pas P suivant le deuxième axe Y du réseau. Les ouvertures traversantes 6 définissent les cavités résonantes $20_i$. La variation de fréquence de résonance $f_{r(i)}$ est induite par une variation d'une propriété physique d'intérêt suivant le deuxième axe Y du réseau, cette propriété physique d'intérêt pouvant par exemple être l'épaisseur $e(y)$ et/ou l'indice de réfraction $n(y)$ de la couche intercalaire 22.

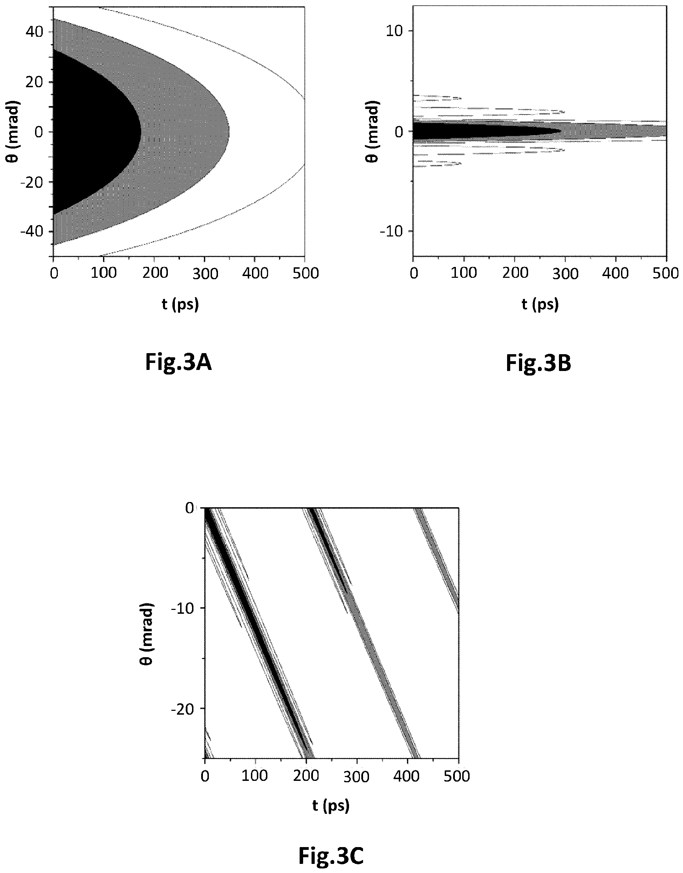

Les figures 3A à 3C illustrent différents exemples d'évolution temporelle du diagramme de rayonnement en champ lointain de l'émetteur optoélectronique 1 en configuration structurée (cf. fig.2A), pour une cavité résonante unique (fig.3A), pour un réseau 2 de cavités résonantes $20_i$ sans variation des fréquences de résonance (fig.3B), et pour un réseau 2 de cavités résonantes $20_i$ avec variation des fréquences de résonance (fig.3C). L'intensité optique est représentée en échelle logarithmique, et la largeur de chaque niveau de gris correspond à un facteur 5.

On peut définir une expression de l'intensité du faisceau lumineux en champ lointain pour une cavité résonante unique, en fonction de l'angle d'inclinaison $\theta$, dans le cas où le signal optique d'excitation présente un profil d'intensité uniforme. Dans ce cas, la lumière est injectée dans la cavité résonante principalement dans le mode transverse fondamental. En tenant compte du champ optique en $\cos(\pi y/L_y)$ de ce mode transverse, on peut ainsi écrire l'intensité du faisceau lumineux en champ lointain en fonction de l'angle d'inclinaison $\theta$ par rapport à l'axe Z, émis par la cavité résonante unique :

$$I_i(t,\theta) \propto e^{-t/\tau}\frac{4e_i^2}{\pi^2}\frac{\cos^2\frac{\pi e_i\theta}{\lambda_{r(i)}}}{\left(1-\left(\frac{2e_i\theta}{\lambda_{r(i)}}\right)^2\right)^2} \quad (4)$$

On peut ensuite, en sommant l'amplitude du faisceau lumineux élémentaire par chacune des cavités résonantes $20_i$, décrire l'évolution temporelle en fonction de l'angle d'inclinaison $\theta$ de l'intensité du faisceau lumineux principal émis par l'émetteur optoélectronique 1 en champ lointain, par l'expression suivante :

$$I_p(t,\theta) = I_0(t,\theta)\frac{\sin^2\left((2M+1)\frac{\eta}{2}\right)}{\sin^2(\frac{\eta}{2})} \quad (5)$$

avec

$$\eta = 2\pi\left(\Delta\times t + \frac{P\theta}{\lambda_{r(0)}}\right) \quad (6)$$

où $\lambda_{r(0)}$ est la longueur d'onde de résonance de la cavité résonante située sensiblement au centre du réseau (rang i=0).

La fig.3A illustre un exemple d'évolution temporelle du diagramme de rayonnement en champ lointain pour une cavité résonante unique. Dans cet exemple, la cavité résonante est semi-infinie (longueur $L_x$ grande devant la dimension latérale $d_m$ du mode résonant) suivant le deuxième axe Y du réseau. La largeur $L_y$ est égale à $20\mu m$. Une impulsion laser est reçue l'instant t=0, et la cavité résonante émet en réponse un faisceau lumineux élémentaire à la fréquence de résonance $f_r=3\times10^{14}$Hz (longueur d'onde $\lambda_r=1\mu m$). Le temps de stockage $\tau$ est ici égal à 200ps.

On remarque que l'intensité du faisceau lumineux élémentaire en champ lointain décroît exponentiellement au cours du temps. Par ailleurs, la distribution angulaire ne change pas au cours du temps : la direction principale d'émission $D_{pe}$ du faisceau lumineux reste orientée suivant la direction +Z. Aussi, l'angle d'inclinaison $\theta(t)$ est stationnaire et reste égal à zéro.

La fig.3B illustre un exemple d'évolution temporelle du diagramme de rayonnement en champ lointain pour un réseau 2 de cavités résonantes $20_i$ ne présentant pas de variation des fréquences de résonance (ces dernières sont égales d'une cavité résonante $20_i$ à l'autre). Les cavités résonantes $20_i$ présentent les mêmes caractéristiques que celle décrite en référence à la fig.3A. Elles sont agencées de manière périodique suivant le deuxième axe Y du réseau avec un pas P égal à 40μm. Dans cet exemple, M est égal à 9, de sorte que le réseau comporte 19 cavités résonantes (N=2×M+1=19). En champ lointain, le faisceau lumineux principal est formé par interférence entre les faisceaux lumineux élémentaires.

On remarque que le faisceau lumineux principal présente une distribution angulaire plus piquée, c'est-à-dire plus étroite, autour de l'axe principal d'émission $D_{pe}$. Cette réduction de la divergence du cône d'émission du faisceau lumineux principal est due à la mise en réseau des cavités résonantes $20_i$ et à l'interférence entre les faisceaux lumineux élémentaires. Par ailleurs, ici également, la distribution angulaire ne change pas au cours du temps : la direction principale d'émission $D_{pe}$ du faisceau lumineux reste orientée suivant la direction +Z. Aussi, l'angle d'inclinaison θ(t) est stationnaire et reste égal à zéro.

Notons ici que le diagramme de rayonnement du faisceau lumineux principal, où l'intensité présente un pic pour une valeur nulle de l'angle d'inclinaison θ=0, est ici représentatif d'un réseau comportant un nombre impair de cavités résonantes $20_i$. Dans le cas d'un nombre pair de cavités résonantes $20_i$, le faisceau lumineux principal présente deux pics d'intensité situés de part et d'autre de l'angle d'inclinaison θ=0.

Le fig.3C illustre un exemple d'évolution temporelle du diagramme de rayonnement en champ lointain pour un réseau 2 de cavités résonantes $20_i$. Les cavités résonantes $20_i$ présentent les mêmes caractéristiques que celles décrites en référence à la fig.3B, hormis le fait que les fréquences de résonance $f_{r(i)}$ présentent une variation monotone d'une cavité résonante $20_i$ à l'autre, avec un écart Δ constant égal à $5×10^9$Hz.

On remarque que le faisceau lumineux principal présente également une distribution angulaire très piquée autour de la direction principale d'émission $D_{pe}$. Cependant, à la différence de l'exemple de la fig.3B, la direction principale d'émission $D_{pe}$ n'est plus stationnaire et orientée suivant la direction +Z, mais varie linéairement en fonction du temps. Aussi, l'angle d'inclinaison θ(t) varie entre une valeur nulle et une valeur maximale, ici 25mrad, en un temps égal à 200ps environ. Le secteur angulaire est balayé plusieurs fois, à mesure que l'intensité optique décroît en fonction du temps.

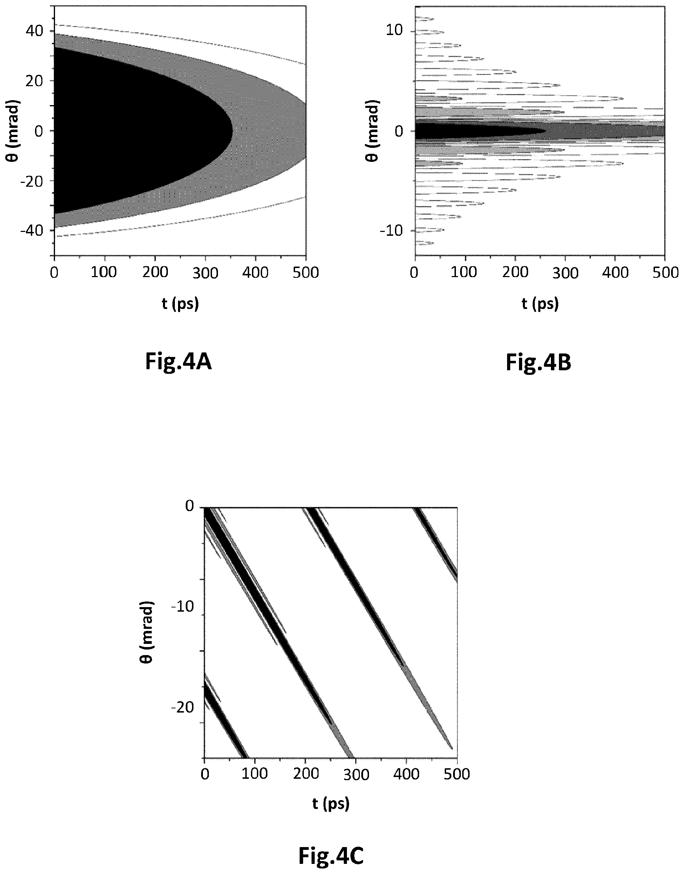

Les figures 4A à 4C illustrent différents exemples d'évolution temporelle du diagramme de rayonnement en champ lointain de l'émetteur optoélectronique 1 en configuration planaire non structurée (cf. fig.2B), pour une cavité résonante unique (fig.4A), pour un réseau 2 de cavités résonantes $20_i$ sans variation des fréquences de résonance (fig.4B), et pour un réseau 2 de cavités résonantes $20_i$ avec une variation des fréquences de résonance (fig.4C). Ici également, l'intensité optique est représentée en échelle logarithmique et la largeur de chaque niveau de gris correspond à un facteur 5.

On peut définir une expression de l'intensité du faisceau lumineux en champ lointain en fonction de l'angle d'inclinaison θ pour une cavité résonante unique, dans le cas où le signal optique d'excitation présente un profil d'intensité uniforme. Dans ce cas, à la différence de la configuration de la fig.2A, la cavité résonante est dimensionnée par l'ouverture traversante 6 de la couche mince opaque 5 située sur sa face d'émission, et non pas par une bordure physique d'un plot reposant sur le substrat 3. Puisque le signal optique d'excitation injecte un champ uniforme dans le plan de la cavité, on peut écrire l'évolution temporelle de l'intensité du faisceau lumineux en champ lointain en fonction de l'angle d'inclinaison θ par rapport à l'axe Z, émis par la cavité résonante unique de la façon suivante :

$$I_i(t,\theta) \propto e^{-t/\tau} e_i^2 \frac{\sin^2 \pi e_i \theta / \lambda_{r(i)}}{\left(2 e_i \theta / \lambda_{r(i)}\right)^2} \quad (7)$$

On peut ensuite, comme précédemment, décrire l'évolution temporelle de l'intensité $I_p(t,\theta)$ du faisceau lumineux principal émis par l'émetteur optoélectronique 1 en champ lointain, en fonction de l'angle d'inclinaison θ que forme la direction principale d'émission $D_{pe}$ vis-à-vis de l'axe vertical Z dans le plan YZ.

La fig.4A illustre un exemple d'évolution temporelle du diagramme de rayonnement en champ lointain pour une cavité résonante unique $20_i$. Dans cet exemple, la cavité résonante $20_i$ est formée au sein de l'empilement planaire 4. Le miroir de Bragg supérieur 21.2 est revêtu d'une couche mince opaque 5, qui présente une ouverture traversante 6 (fente) de largeur $L_y$ de 20μm et de longueur $L_x$ supérieure à la dimension latérale $d_m$. Une impulsion laser est reçue l'instant t=0, et la cavité résonante émet en réponse un faisceau lumineux élémentaire à la fréquence de résonance $f_r=3×10^{14}$Hz (longueur d'onde $\lambda_r=1$μm). Le temps de stockage τ est ici égal à 200ps environ.

L'évolution temporelle de l'intensité du faisceau lumineux élémentaire en champ lointain est similaire à celle de la fig.3A. La direction principale d'émission $D_{pe}$ du faisceau lumineux reste ici également orientée suivant la direction +Z : l'angle d'inclinaison θ(t) est stationnaire et reste égal à zéro. L'intensité optique décroît de manière exponentielle en fonction du temps.

La fig.4B illustre un exemple d'évolution temporelle du diagramme de rayonnement en champ lointain du faisceau lumineux principal formé par un réseau 2 de cavités résonantes $20_i$ qui ne présente pas de variation des fréquences de résonance (fréquences $f_{r(i)}$ égales entre elles). Les cavités résonantes $20_i$ présentent les mêmes caractéristiques que celles décrites en référence à la fig.4A, si ce n'est qu'elles sont définies par des ouvertures traversantes 6 pratiquées dans la couche mince opaque 5. Les ouvertures sont de largeur $L_y$ de $20\mu m$, et d'une longueur $L_x$ supérieure à la dimension latérale $d_m$. Elles sont agencées périodiquement, suivant le deuxième axe Y du réseau, avec un pas P de $40\mu m$. Dans cet exemple, M est égal à 9, de sorte que le réseau comporte 19 cavités résonantes. En champ lointain, le faisceau lumineux principal est formé par interférence entre les faisceaux lumineux élémentaires.

Le faisceau lumineux principal présente une distribution angulaire ayant un pic centré sur la direction principale d'émission $D_{pe}$. La distribution angulaire ne change pas au cours du temps : la direction principale d'émission $D_{pe}$ du faisceau lumineux reste orientée suivant la direction +Z. Aussi, l'angle d'inclinaison $\theta(t)$ est stationnaire et reste égal à zéro.

Le fig.4C illustre un exemple d'évolution temporelle du diagramme de rayonnement en champ lointain pour un réseau 2 de cavités résonantes $20_i$. Les cavités résonantes $20_i$ présentent les mêmes caractéristiques que celles décrites en référence à la fig.4B, hormis le fait que les fréquences de résonance $f_{r(i)}$ présentent une variation monotone d'une cavité résonante $20_i$ à l'autre, avec un écart $\Delta$ constant égal à $5\times10^9$Hz.

On remarque que le faisceau lumineux principal présente également une distribution angulaire très piquée autour de la direction principale d'émission $D_{pe}$. Cependant, à la différence de l'exemple de la fig.4B, la direction principale d'émission $D_{pe}$ n'est plus stationnaire et orientée suivant la direction +Z, mais varie linéairement en fonction du temps. Aussi, l'angle d'inclinaison $\theta(t)$ varie entre une valeur nulle et une valeur maximale, ici 25mrad, en un temps égal à 200ps environ. Le secteur angulaire est balayé plusieurs fois, à mesure que l'intensité optique décroît en fonction du temps.

Ainsi, l'émetteur optoélectronique 1 est adapté à émettre un faisceau lumineux qui effectue en champ lointain un balayage très rapide d'un secteur angulaire. Le secteur angulaire peut être de l'ordre de quelques dizaines de milliradians, et le temps de balayage (cadence) peut être inférieur à la nanoseconde. Le faisceau lumineux principal présente une faible divergence angulaire autour de la direction principale d'émission $D_{pe}$.

Le balayage angulaire est obtenu par la variation monotone de la fréquence de résonance des cavités résonantes $20_i$, et ne nécessite pas l'emploi d'un dispositif mécanique pour effectuer ce balayage angulaire. Il ne nécessite pas non plus l'utilisation de déphaseurs pour appliquer une phase relative entre les signaux optiques éclairant les différentes cavités résonantes $20_i$. Il se distingue ainsi des émetteurs optoélectroniques à antenne réseau à commande de phase en ce que le signal optique d'excitation est identique pour toutes les cavités résonantes $20_i$, et en ce que les cavités résonantes $20_i$ présentent une variation d'une propriété physique d'intérêt, cette variation étant à l'origine de la variation spatiale des fréquences de résonance et se traduit par l'apparition d'une phase relative entre les faisceaux lumineux élémentaires au cours de leur propagation en espace libre. Au contraire, dans le cas des émetteurs optoélectroniques à antenne réseau à commande de phase, chaque antenne optique reçoit un signal optique d'excitation différent de celui de l'antenne optique adjacente (déphasage). De plus, les antennes optiques présentent toutes les mêmes propriétés physiques.

Notons que l'émetteur optoélectronique 1 selon l'invention peut présenter une variation monotone linéaire ou non linéaire des fréquences de résonance d'une cavité résonante $20_i$ à l'autre. Par ailleurs, les cavités résonantes $20_i$ peuvent être agencées de manière périodique ou non suivant le deuxième axe Y du réseau. Enfin, les cavités résonantes $20_i$ peuvent présenter une largeur $L_y$ identique ou non d'une cavité résonante $20_i$ à l'autre. Quoi qu'il en soit, ces différents ajustements des caractéristiques du réseau de cavité résonante conduisent également à ce que l'interférence entre les faisceaux lumineux élémentaires (orientés suivant l'axe vertical Z) provoque la formation d'un faisceau lumineux principal en champ lointain ayant une inclinaison $\theta(t)$ qui varie au cours du temps. La loi g de variation angulaire $\theta=g(t)$ peut varier selon les différents ajustements mentionnés précédemment.

Notons également que les caractéristiques du balayage angulaire peuvent être ajustées en fonction d'un ensemble de paramètres. Ces paramètres peuvent être le nombre M (ou le nombre total N de cavités résonantes $20_i$), la largeur $L_y$, le pas P, le temps de stockage $\tau$ (ou le facteur de qualité Q), et l'écart $\Delta$ entre les fréquences de résonance $f_{r(i)}$ des cavités résonantes $20_i$ adjacentes. Il apparaît en effet que les caractéristiques suivantes peuvent s'exprimer en fonction de ces paramètres par les relations :

- La vitesse angulaire $d\theta/dt$ de balayage : $d\theta/dt = \lambda_{r(0)}\Delta/P$.
- La taille $L_\theta$ du secteur angulaire balayé : $L_\theta = \pm 0.6\times\lambda_{r(0)}/L_y$ dans le cas des cavités résonantes $20_i$ en configuration structurée (cf. fig.2A), ou : $Le = \pm 0.44\times\lambda_{r(0)}/L_y$ dans le cas des cavités résonantes $20_i$ en configuration planaire non structurée (cf. fig.2B).
- La largeur angulaire $\delta\theta$ du faisceau lumineux principal : $\delta\theta = L_\theta/N = 3\lambda_{r(0)}/4NL_y$.
- La période de balayage $T_\theta$ du secteur angulaire (durée entre deux instants successifs où le faisceau lumineux principal passe par $\theta=0°$) : $Te = 1/\Delta$.

Il est alors possible d'ajuster telle ou telle caractéristique du balayage angulaire en fonction des paramètres en question.

Le procédé de fabrication d'un émetteur optoélectronique 1 selon l'invention dépend notamment du choix de la propriété physique d'intérêt (épaisseur et/ou indice de réfraction de la couche intercalaire 22, largeur des cavités résonantes $20_i$) à faire varier pour obtenir la variation spatiale de la fréquence de résonance d'une cavité résonante $20_i$ à l'autre.

D'une manière générale, les cavités résonantes $20_i$ peuvent être réalisées par des techniques de dépôt de couches minces. Ainsi, les cavités résonantes $20_i$ peuvent être réalisées en un ou des matériaux diélectriques, ou en un ou des matériaux semiconducteurs. A titre d'exemple, elles peuvent être réalisées en des composés semiconducteurs cristallins III-V, par exemple à base d'arsenic As, au moyen d'une technique de croissance épitaxiale telle que l'épitaxie par jets moléculaires (MBE, pour *Molecular Beam Epitaxy,* en anglais), voire par dépôt chimique en phase vapeur aux organométalliques (MOCVD, pour *Métal Organic Chemical Vapor Deposition,* en anglais). Les couches des miroirs de Bragg 21.1, 21.2 peuvent également être réalisées à partir de composés diélectriques amorphes déposés par CVD, par exemple à partir de $SiO_2$ et de $TiO_2$.

A titre d'exemple, le substrat 3 peut ainsi être réalisé en GaAs. Les miroirs de Bragg peuvent être réalisés en une alternance de couches minces cristallines de GaAs et de AlAs, par exemple en une alternance de 24 paires d'une couche mince de GaAs de 65nm d'épaisseur et d'une couche mince de AlAs de 80nm d'épaisseur pour le miroir de Bragg inférieur 21.1, et en une alternance de 20 paires d'une couche mince de AlAs de 80nm d'épaisseur et d'une couche mince de GaAs de 65nm d'épaisseur pour le miroir de Bragg supérieur 21.2. La couche intercalaire 22 peut être réalisée en GaAs d'une épaisseur de 8580nm d'épaisseur.

On note ici que la couche intercalaire 22 présente une épaisseur égale à $k \times \lambda_{r(0)}/2n$, où k est un entier, et n est l'indice de réfraction du GaAs à la longueur d'onde $\lambda_{r(0)}$. Il est avantageux que k soit grand, par exemple égal à 60 environ, et non pas égal à 2 comme c'est habituellement le cas dans les cavités résonantes $20_i$ utilisées par exemple dans les lasers à émission par la surface. Ainsi, une valeur élevée de l'épaisseur de la couche intercalaire 22 participe à obtenir un facteur de qualité Q important (et donc un temps de stockage $\tau$ important).

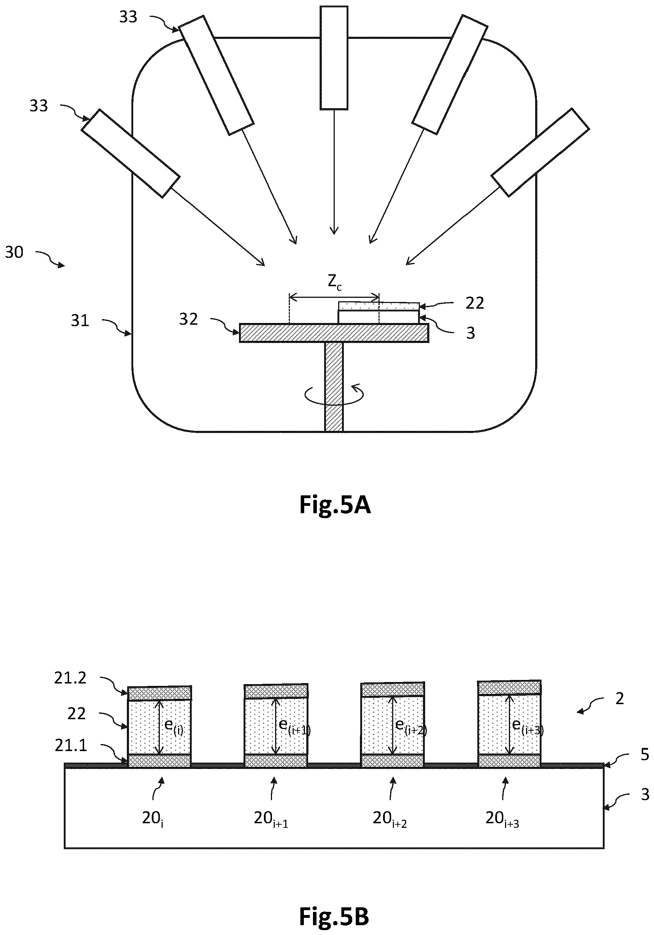

La figure 5A illustre de manière schématique et partielle un réacteur MBE 30 qui peut être utilisé pour réaliser une couche intercalaire 22 dont l'épaisseur présente une variation monotone suivant un axe prédéfini, dans le but d'obtenir la variation monotone des fréquences de résonance des cavités résonantes $20_i$. Cette variation de l'épaisseur suivant un axe prédéfini est obtenue par le fait de placer le substrat de manière excentrée par rapport à l'axe de rotation de l'échantillon. La figure 5B est une vue schématique et partielle, en coupe transversale, d'un réseau 2 de cavités résonantes $20_i$ selon la configuration structurée de la fig.2A, mettant en évidence la variation de l'épaisseur $e_{(i)}$ des cavités résonantes $20_i$ selon le deuxième axe Y du réseau.

En référence à la fig.5A, le réacteur MBE 30 comporte une enceinte 31 dans laquelle est située une platine 32 de support sur laquelle la couche intercalaire 22 est destinée à être réalisée. La platine 32 est destinée à tourner sur elle-même lors de la phase de dépôt. Des sources d'évaporation 33 des éléments chimiques sont disposées en regard de la platine 32, par exemple une source de Ga et une source d'As.

Le réacteur MBE 30 est configuré pour que la zone de croissance épitaxiale optimale soit située dans une zone centrale $Z_c$ de la platine 32, de sorte que la couche déposée présente une épaisseur uniforme dans le plan XY. Aussi, dans le but d'obtenir une couche intercalaire 22 présentant une variation monotone de son épaisseur suivant un axe donné, on place le substrat 3 de croissance de manière décalée vis-à-vis de la zone centrale $Z_c$. Aussi, si une épaisseur e en y=0 (situé sur l'axe de rotation de la platine 32) de la couche intercalaire 22 correspond à une fréquence de résonance $f_r(y=0)$ pour une cavité résonante d'ordre O de sorte que l'on a : $f(y=0) = O \times c/(n \times e(y=0))$, on sait alors que la fréquence de résonance $f_r(y)$ va varier suivant le deuxième axe Y du réseau selon la relation : $f(y) = O \times c/(n \times e(y))$.

Dans le cas de la configuration structurée (fig.2A), on tient avantageusement compte du fait que le confinement latéral du mode résonant induit un décalage de la fréquence de résonance $f_r$ par rapport au cas où le mode résonant n'est pas confiné dans le plan XY. La fréquence de résonance $f_r$ s'exprime alors de la manière suivante, en fonction de l'indice i de la cavité résonante :

$$f_{r(i)} = f_r(i \times P) + \frac{c^2}{8n^2 L_y^2 f_r(i \times P)} \quad (8)$$

L'écart $\Delta$ entre les fréquences de résonance de deux cavités résonantes $20_{(i)}$, $20_{(i+1)}$ adjacentes peut s'écrire, au premier ordre (i.e. dans le cas souhaité où le gradient d'épaisseur $\nabla_y e(y)$ est très faible) :

$$\Delta = f_{r(i+1)} - f_{r(i)} = P \times \frac{df}{dy} = f_{r(y=0)} \times \frac{de}{dy}(y=0) \times \frac{P}{e(y=0)} \quad (9)$$

Une fois obtenu l'empilement des miroirs de Bragg et de la couche intercalaire 22, les cavités résonantes $20_i$

peuvent être formées par gravure localisée de l'empilement planaire 4 (configuration structurée de la fig.2A).

Notons que, en variante ou en complément, la variation monotone des fréquences de résonance des cavités résonantes $20_i$ peut, dans cette configuration structurée, être obtenue en faisant varier la largeur $L_y$ des cavités résonantes $20_i$. En effet, comme le montre l'équation (8) ci-dessus, la largeur $L_y$ impacte le confinement latéral du mode résonant et donc la fréquence de résonance.

Par ailleurs, en variante ou en complément, il est possible d'obtenir la variation monotone des fréquences de résonance des cavités résonantes $20_i$ en faisant varier l'indice de réfraction local de la couche intercalaire 22 des cavités résonantes $20_i$. A titre d'exemple, une telle variation monotone peut être obtenue par effet thermo-optique, au moyen d'un chauffage local par effet Joule de chaque cavité résonante par une chaufferette. La chaufferette peut être un fil conducteur situé au pied de chaque cavité résonante, par exemple dans une couche intermédiaire disposée suivant l'axe Z entre le substrat 3 et les cavités résonantes $20_i$.

Enfin, en variante ou en complément, la variation de l'indice de réfraction local du matériau de la couche intercalaire 22, d'une cavité résonante $20_i$ à l'autre, peut être obtenue par l'injection d'un plasma électrons-trous dans le matériau semiconducteur par pompage optique. Une deuxième source optique d'un signal de pompe éventuellement continu, et un modulateur spatial d'intensité, peuvent être disposés en regard du réseau 2 de cavités résonantes $20_i$, en face avant ou en face arrière de celui-ci, de manière à injecter des paires électron-trou dans les différentes cavités résonantes $20_i$, et générer ainsi une variation de l'indice de réfraction du matériau de la couche intercalaire 22 d'une cavité résonante $20_i$ à l'autre. Dans le cas d'un réseau bidimensionnel de cavités résonantes identiques, ces approches peuvent permettre de définir la direction selon laquelle on introduit une variation de la fréquence de résonance, et donc le plan dans lequel le balayage en champ lointain est obtenu.

Des modes de réalisation particuliers viennent d'être décrits. Différentes variantes et modifications apparaîtront à l'homme du métier.

## Revendications

1. Emetteur optoélectronique (1) à balayage angulaire, comportant :

   ○ un réseau (2) de cavités résonantes ($20_i$), reposant sur un substrat (3) définissant un plan principal, les cavités résonantes ($20_i$) étant :

   - agencées parallèlement les unes aux autres et s'étendant chacune longitudinalement suivant un premier axe (X) du réseau,
   - formées chacune d'un empilement de deux réflecteurs opposés (21.1, 21.2) et d'une couche intercalaire (22) située entre les réflecteurs (21.1, 21.2), et présentant une face d'émission opposée au substrat (3),
   - adaptées chacune à émettre par la face d'émission un faisceau lumineux dit élémentaire à une fréquence de résonance $f_{r(i)}$ propre à chaque cavité résonante ($20_i$), en réponse à un signal optique d'excitation impulsionnel,
   - présentant chacune un temps $\tau_{(i)}$ de stockage de la lumière, qui est fonction de coefficients de réflectivité des réflecteurs (20.1, 21.2), d'une épaisseur et d'un indice de réfraction de la couche intermédiaire (22) ;
   - configurées pour présenter une variation des fréquences de résonance $f_{r(i)}$ d'une cavité résonante ($20_i$) à l'autre, suivant un deuxième axe (Y) du réseau perpendiculaire au premier axe (X), le balayage angulaire de l'émetteur optoélectronique (1) se produisant alors dans un plan perpendiculaire à celui du substrat (3) et contenant le deuxième axe (Y) ;

   ○ une source optique (10) adaptée à émettre ledit signal optique d'excitation impulsionnel de manière à éclairer et à exciter simultanément toutes les cavités résonantes ($20_i$), lequel est :

   - cohérent ;
   - d'une durée d'impulsion $\Delta t_e$ inférieure au temps $\tau_{(i)}$ de stockage de la lumière de chacune des cavités résonantes ($20_i$), et
   - d'une largeur spectrale $\Delta f_e$ centrée sur une fréquence centrale $f_e$, $\Delta f_e$ et $f_e$ étant prédéfinies de manière à couvrir la gamme des fréquences de résonance $f_{r(i)}$ des cavités résonantes.

2. Emetteur optoélectronique (1) selon la revendication 1, dans lequel les cavités résonantes ($20_i$) sont configurées pour que le temps de stockage $\tau_{(i)}$ soit égal à $1/\Delta$, où $\Delta$ est un l'écart entre les fréquences de résonance $f_{r(i)}$, $f_{r(i+1)}$ des cavités résonantes adjacentes.

3. Emetteur optoélectronique (1) selon la revendication 1 ou 2, dans lequel les cavités résonantes ($20_i$) sont configurées pour présenter une variation des fréquences de résonance $f_{r(i)}$ d'une cavité résonante ($20_i$) à l'autre inférieure ou égale à 1%, voire à 0.1%, ou encore à 0.01%.

4. Emetteur optoélectronique (1) selon l'une quelconque des revendications 1 à 3, dans lequel les cavités résonantes ($20_i$) sont configurées de sorte que la variation des fréquences de résonance $f_{r(i)}$ est monotone.

5. Emetteur optoélectronique (1) selon l'une quelconque des revendications 1 à 4, dans lequel la variation des fréquences de résonance $f_{r(i)}$ résulte d'une variation suivant le deuxième axe (Y) du réseau :

   ◦ d'une épaisseur des couches intercalaires (22), d'une cavité résonante ($20_i$) à l'autre, l'épaisseur étant définie suivant un axe perpendiculaire au plan principal,
   ◦ et/ou d'un indice de réfraction des couches intercalaires (22), d'une cavité résonante ($20_i$) à l'autre.

6. Emetteur optoélectronique (1) selon l'une quelconque des revendications 1 à 5, dans lequel les cavités résonantes ($20_i$) sont des plots distincts les uns des autres répartis sur le substrat (3) et délimités chacun par des flancs latéraux sensiblement perpendiculaires au substrat (3).

7. Emetteur optoélectronique (1) selon la revendication 6, dans lequel la variation des fréquences de résonance $f_{r(i)}$ résulte d'une variation suivant le deuxième axe (Y) du réseau d'une largeur ($L_y$) des cavités résonantes ($20_i$) suivant le deuxième axe (Y) du réseau.

8. Emetteur optoélectronique (1) selon l'une quelconque des revendications 1 à 5, dans lequel les cavités résonantes ($20_i$) sont des zones d'un même empilement (4) formé des réflecteurs (21.1, 21.2) et de la couche intercalaire (22), l'empilement (4) étant recouvert par une couche mince (5) opaque à la longueur d'onde des faisceaux lumineux élémentaires, la couche mince optique (5) comportant des ouvertures traversantes (6) définissant une surface d'émission des cavités résonantes ($20_i$).

9. Emetteur optoélectronique (1) selon l'une quelconque des revendications 1 à 8, dans lequel les cavités résonantes ($20_i$) présentent une largeur $L_y$ suivant le deuxième axe (Y) du réseau et une longueur $L_x$ suivant le premier axe (X) du réseau, la longueur $L_x$ et la largeur $L_y$ étant respectivement supérieure et inférieure à une dimension latérale $d_m$ d'un mode résonant dans une cavité résonante planaire de dimensions infinies dans le plan principal, la dimension latérale $d_m$ étant prédéfinie en fonction d'une longueur d'onde de résonance d'une cavité résonante de référence ($20_{ir}$) du réseau (2), de l'épaisseur et de l'indice de réfraction de sa couche intermédiaire (22), et des coefficients de réflectivité des deux réflecteurs (21.1, 21.2).

10. Emetteur optoélectronique (1) selon l'une quelconque des revendications 1 à 9, dans lequel les cavités résonantes sont réalisées à base de composés diélectriques ou semiconducteurs III-V, et/ou dans lequel les réflecteurs (21.1, 21.2) sont des miroirs de Bragg.

11. Emetteur optoélectronique (1) selon l'une quelconque des revendications 1 à 10, dans lequel la couche intercalaire (22) d'une cavité résonante centrale ($20_{ic}$) du réseau (2) présente une épaisseur égale à $k \times \lambda_{r(0)}/2n$, où k est un entier, $\lambda_{r(ic)}$ est la longueur d'onde de résonance de la cavité résonante centrale ($20_{ic}$), et n est l'indice de réfraction de la couche intercalaire (22) correspondante.

12. Emetteur optoélectronique (1) selon l'une quelconque des revendications 1 à 11, présentant une vitesse angulaire de balayage ($\partial_t\theta$) prédéfinie en fonction d'un écart ($\Delta$) entre les fréquences de résonance de deux cavités résonantes ($20_i$) adjacentes, d'une longueur d'onde de résonance ($\lambda_{r(0)}$) d'une cavité résonante centrale ($20_{ic}$) du réseau (2), et d'un pas (P) d'agencement spatial des cavités résonantes ($20_i$) suivant le deuxième axe (Y) du réseau.

13. Emetteur optoélectronique (1) selon l'une quelconque des revendications 1 à 12, présentant une largeur ($L_0$) d'un secteur angulaire balayé par le faisceau lumineux principal prédéfinie en fonction d'une longueur d'onde de résonance ($\lambda_{r(0)}$) d'une cavité résonante centrale ($20_{ic}$) du réseau (2) et d'une largeur ($L_y$) des cavités résonantes ($20_i$) suivant le deuxième axe (Y) du réseau.

14. Emetteur optoélectronique (1) selon la revendication 13, présentant une largeur angulaire ($\delta\theta$) du faisceau lumineux principal prédéfinie en fonction de la largeur du secteur angulaire (Le) et d'un nombre total des cavités résonantes ($20_i$).

**15.** Procédé de fabrication d'un émetteur optoélectronique (1) selon l'une quelconque des revendications précédentes, dans lequel la variation des fréquences de résonance est induite par une variation d'épaisseur de la couche intercalaire (22) des cavités résonantes (20$_i$) suivant le deuxième axe (Y) du réseau (2), le procédé comportant une étape de réalisation d'un empilement (4) destiné à former le réseau (2) de cavités résonantes (20$_i$), l'empilement (4) étant réalisé dans un réacteur (30), sur une platine (31), à partir d'une position qui est décalée latéralement vis-à-vis d'un axe de rotation de la platine (31) par rapport à une position de référence pour laquelle l'épaisseur de la couche intercalaire (22) présente une épaisseur uniforme.

**Patentansprüche**

**1.** Optoelektronischer Emitter (1) mit Winkelabtastung, umfassend:

◦ eine Anordnung (2) von Resonanzhohlräumen (20$_i$), die auf einem Substrat (3) ruhen, das eine Hauptebene definiert, wobei die Resonanzhohlräume (20$_i$):

• parallel zueinander angeordnet sich und sich jeweils in Längsrichtung entlang einer ersten Achse (X) der Anordnung erstrecken,
• jeweils aus einem Stapel von zwei gegenüberliegenden Reflektoren (21.1, 21.2) und einer zwischen den Reflektoren (21.1, 21.2) angeordneten Zwischenschicht (22) gebildet sind und eine dem Substrat (3) gegenüberliegende Emissionsfläche aufweisen,
• jeweils dazu ausgelegt sind, als Reaktion auf ein gepulstes optisches Anregungssignal über die Emissionsfläche einen Elementarlichtstrahl mit einer für jeden Resonanzhohlraum (20$_i$) geeigneten Resonanzfrequenz $f_{r(i)}$ zu emittieren,
• jeweils eine Lichtspeicherzeit $\tau_{(i)}$ aufweisen, die von Reflexionskoeffizienten der Reflektoren (20.1, 21.2), von einer Dicke und von einem Brechungsindex der Zwischenschicht (22) abhängt;
• dazu konfiguriert sind, eine Variation der Resonanzfrequenzen $f_{r(i)}$ von einem Resonanzhohlraum (20$_i$) zum nächsten entlang einer zweiten Achse (Y) der Anordnung senkrecht zur ersten Achse (X) zu zeigen, wobei die Winkelabtastung des optoelektronischen Emitters (1) dann in einer Ebene senkrecht zu der des Substrats (3) erfolgt und die zweite Achse (Y) enthält;

◦ eine optische Quelle (10), die dazu ausgelegt ist, das gepulste optische Anregungssignal zu emittieren, um alle Resonanzhohlräume (20$_i$) gleichzeitig zu beleuchten und anzuregen, welches:

• kohärent ist;
• eine Impulsdauer $\Delta t_e$ aufweist, die kürzer als die Lichtspeicherzeit $\tau_{(i)}$ jedes der Resonanzhohlräume (20$_i$) ist, und
• eine spektrale Breite $\Delta f_e$ aufweist, die auf einer zentralen Frequenz $f_e$ zentriert ist, wobei $\Delta f_e$ und $f_e$ vordefiniert sind, um den Bereich der Resonanzfrequenzen $f_{r(i)}$ der Resonanzhohlräume abzudecken.

**2.** Optoelektronischer Emitter (1) nach Anspruch 1, wobei die Resonanzhohlräume (20$_i$) so konfiguriert sind, dass die Speicherzeit $\tau_{(i)}$ gleich $1/\Delta$ ist, wobei $\Delta$ eine Differenz zwischen den Resonanzfrequenzen $f_{r(i)}$, $f_{r(i+1)}$ benachbarter Resonanzhohlräume ist.

**3.** Optoelektronischer Emitter (1) nach Anspruch 1 oder 2, wobei die Resonanzhohlräume (20$_i$) so konfiguriert sind, dass sie eine Variation der Resonanzfrequenzen $f_{r(i)}$ von einem Resonanzhohlraum (20$_i$) zum nächsten aufweisen, die kleiner gleich 1 %, oder 0,1 % oder sogar 0,01 % ist.

**4.** Optoelektronischer Emitter (1) nach einem der Ansprüche 1 bis 3, wobei die Resonanzhohlräume (20$_i$) so konfiguriert sind, dass die Variation der Resonanzfrequenzen $f_{r(i)}$ monoton ist.

**5.** Optoelektronischer Emitter (1) nach einem der Ansprüche 1 bis 4, wobei die Variation der Resonanzfrequenzen $f_{r(i)}$ aus einer Variation entlang der zweiten Achse (Y) der Anordnung resultiert:

◦ in einer Dicke der Zwischenschichten (22) von einem Resonanzhohlraum (20$_i$) zum nächsten, wobei die Dicke entlang einer Achse senkrecht zur Hauptebene definiert ist,
◦ und/oder in einem Brechungsindex der Zwischenschichten (22) von einem Resonanzhohlraum (20$_i$) zum nächsten.

**6.** Optoelektronischer Emitter (1) nach einem der Ansprüche 1 bis 5, wobei die Resonanzhohlräume ($20_i$) voneinander verschieden Pads sind, die über das Substrat (3) verteilt sind und jeweils durch seitliche Flanken begrenzt sind, die im Wesentlichen senkrecht zum Substrat (3) sind.

**7.** Optoelektronischer Emitter (1) nach Anspruch 6, wobei die Variation der Resonanzfrequenzen $f_{r(i)}$ aus einer Variation entlang der zweiten Achse (Y) der Anordnung in einer Breite ($L_y$) der Resonanzhohlräume ($20_i$) entlang der zweiten Achse (Y) der Anordnung resultiert.

**8.** Optoelektronischer Emitter (1) nach einem der Ansprüche 1 bis 5, wobei die Resonanzhohlräume ($20_i$) Bereiche ein und desselben Stapels (4) sind, der aus den Reflektoren (21.1, 21.2) und der Zwischenschicht (22) gebildet ist, wobei der Stapel (4) von einer dünnen Schicht (5) bedeckt ist, die bei der Wellenlänge der Elementarlichtstrahlen undurchsichtig ist, wobei die optische dünne Schicht (5) Durchgangsöffnungen (6) aufweist, die eine Emissionsoberfläche der Resonanzhohlräume ($20_i$) definieren.

**9.** Optoelektronischer Emitter (1) nach einem der Ansprüche 1 bis 8, wobei die Resonanzhohlräume ($20_i$) eine Breite $L_y$ entlang der zweiten Achse (Y) der Anordnung und eine Länge $L_x$ entlang der ersten Achse (X) der Anordnung aufweisen, wobei die Länge $L_x$ und die Breite $L_y$ größer bzw. kleiner sind als eine laterale Abmessung $d_m$ eines Resonanzmodus in einem planaren Resonanzhohlraum mit unendlichen Abmessungen in der Hauptebene, wobei die laterale Abmessung $d_m$ gemäß einer Resonanzwellenlänge eines Referenzresonanzhohlraums ($20_{ir}$) der Anordnung (2), der Dicke und dem Brechungsindex seiner Zwischenschicht (22) und den Reflexionskoeffizienten der beiden Reflektoren (21.1, 21.2) vordefiniert ist.

**10.** Optoelektronischer Emitter (1) nach einem der Ansprüche 1 bis 9, wobei die Resonanzhohlräume auf der Basis von III-V-Halbleiter- oder dielektrischen Verbindungen hergestellt sind und/oder wobei die Reflektoren (21.1, 21.2) Bragg-Spiegel sind.

**11.** Optoelektronischer Emitter (1) nach einem der Ansprüche 1 bis 10, wobei die Zwischenschicht (22) eines zentralen Resonanzhohlraums ($20_{ic}$) der Anordnung (2) eine Dicke gleich $k \times \lambda_{r(0)}/2n$ aufweist, wobei k eine ganze Zahl ist und $\lambda_{r(ic)}$ die Resonanzwellenlänge des zentralen Resonanzhohlraums ($20_{ic}$) ist und n der Brechungsindex der entsprechenden Zwischenschicht (22) ist.

**12.** Optoelektronischer Emitter (1) nach einem der Ansprüche 1 bis 11, mit einer Abtastwinkelgeschwindigkeit ($\delta_t\theta$), die gemäß einer Differenz ($\Delta$) zwischen den Resonanzfrequenzen zweier benachbarter Resonanzhohlräume ($20_i$), einer Resonanzwellenlänge ($\lambda_{r(0)}$) eines zentralen Resonanzhohlraums ($20_{ic}$) der Anordnung (2) und einem Abstand (P) der räumlichen Anordnung der Resonanzhohlräume ($20_i$) entlang der zweiten Achse (Y) der Anordnung vordefiniert ist.

**13.** Optoelektronischer Emitter (1) nach einem der Ansprüche 1 bis 12, mit einer Breite ($L_\theta$) eines vom Hauptlichtstrahl abgetasteten Winkelsektors, die gemäß einer Resonanzwellenlänge ($\lambda_{r(0)}$) eines zentralen Resonanzhohlraums ($20_{ic}$) der Anordnung (2) und einer Breite ($L_y$) der Resonanzhohlräume ($20_i$) entlang der zweiten Achse (Y) der Anordnung vordefiniert ist.

**14.** Optoelektronischer Emitter (1) nach Anspruch 13, mit einer Winkelbreite ($\delta\theta$) des Hauptlichtstrahls, die gemäß der Breite des Winkelsektors (Le) und einer Gesamtzahl der Resonanzhohlräume ($20_i$) vordefiniert ist.

**15.** Verfahren zum Herstellen eines optoelektronischen Emitters (1) nach einem der vorhergehenden Ansprüche, wobei die Variation der Resonanzfrequenzen durch eine Variation der Dicke der Zwischenschicht (22) der Resonanzhohlräume ($20_i$) entlang der zweiten Achse (Y) der Anordnung (2) bewirkt wird, wobei das Verfahren einen Schritt zum Herstellen eines Stapels (4) umfasst, der dazu bestimmt ist, die Anordnung (2) von Resonanzhohlräumen ($20_i$) zu bilden, wobei der Stapel (4) in einem Reaktor (30) auf einer Drehscheibe (31) hergestellt wird, ausgehend von einer Position, die in Bezug auf eine Drehachse der Drehscheibe (31) in Bezug auf eine Referenzposition seitlich versetzt ist, für die die Dicke der Zwischenschicht (22) eine gleichmäßige Dicke aufweist.

**Claims**

**1.** An optoelectronic emitter (1) with angular scanning, including:

◦ an array (2) of resonant cavities ($20_i$), resting on a substrate (3) defining a main plane, the resonant cavities ($20_i$) being:

- arranged parallel to one another and each extending longitudinally according to a first axis (X) of the array,
- each formed of a stack of two opposite reflectors (21.1, 21.2) and of an interlayer (22) located between the reflectors (21.1, 21.2), and having an emission face opposite to the substrate (3),
- each adapted to emit, by the emission face, a so-called elementary light beam at a resonance frequency $f_{r(i)}$ specific to each resonant cavity ($20_i$), in response to a pulsed excitation optical signal,
- each having a light storage time $\tau_{(i)}$, which depends on coefficients of reflectivity of the reflectors (20.1, 21.2), on a thickness and on a refractive index of the intermediate layer (22);
- configured to have a variation of the resonance frequencies $f_{r(i)}$ from one resonant cavity ($20_i$) to another, according to a second axis (Y) of the array perpendicular to the first axis (X), the angular scanning of the optoelectronic emitter (1) then taking place in a plane perpendicular to that of the substrate (3) and containing the second axis (Y);

◦ an optical source (10) adapted to emit said pulsed excitation optical signal so as to simultaneously illuminate and excite all of the resonant cavities ($20_i$), which is:

- coherent;
- with a pulse duration $\Delta t_e$ shorter than the light storage time $\tau_{(i)}$ of each of the resonant cavities ($20_i$), and
- with a spectral width $\Delta f_e$ centred on a central frequency $f_e$, $\Delta f_e$ and $f_e$ being predefined so as to cover the range of the resonance frequencies $f_{r(i)}$ of the resonant cavities.

2. The optoelectronic emitter (1) according to claim 1, wherein the resonant cavities ($20_i$) are configured so that the storage time $\tau_{(i)}$ is equal to $1/\Delta$, where $\Delta$ is a difference between the resonance frequencies $f_{r(i)}$, $f_{r(i+1)}$ of adjacent resonant cavities.

3. The optoelectronic emitter (1) according to claim 1 or 2, wherein the resonant cavities ($20_i$) are configured so as to have a variation of the resonance frequencies $f_{r(i)}$ from one resonant cavity ($20_i$) to another that is less than or equal to 1%, and possibly 0.1%, or 0.01%.

4. The optoelectronic emitter (1) according to any one of claims 1 to 3, wherein the resonant cavities ($20_i$) are configured so that the variation of the resonance frequencies $f_{r(i)}$ is monotonic.

5. The optoelectronic emitter (1) according to any one of claims 1 to 4, wherein the variation of the resonance frequencies $f_{r(i)}$ results from a variation, according to the second axis (Y) of the array:

◦ of a thickness of the interlayers (22), from one resonant cavity ($20_i$) to another, the thickness being defined according to an axis perpendicular to the main plane,
◦ and/or of a refractive index of the interlayers (22), from one resonant cavity ($20_i$) to another.

6. The optoelectronic emitter (1) according to any one of claims 1 to 5, wherein the resonant cavities ($20_i$) consist of studs that are distinct from one another distributed over the substrate (3) and each delimited by sidewalls that are substantially perpendicular to the substrate (3).

7. The optoelectronic emitter (1) according to claim 6, wherein the variation of the resonance frequencies $f_{r(i)}$ results from a variation, according to the second axis (Y) of the array, of a width ($L_Y$) of the resonant cavities ($20_i$) according to the second axis (Y) of the array.

8. The optoelectronic emitter (1) according to any one of claims 1 to 5, wherein the resonant cavities ($20_i$) are regions of the same stack (4) formed of the reflectors (21.1, 21.2) and of the interlayer (22), the stack (4) being covered by a thin layer (5) that is opaque at the wavelength of the elementary light beams, the optical thin layer (5) including through openings (6) defining an emission surface of the resonant cavities ($20_i$).

9. The optoelectronic emitter (1) according to any one of claims 1 to 8, wherein the resonant cavities ($20_i$) have a width $L_Y$ according to the second axis (Y) of the array and a length $L_X$ according to the first axis (X) of the array, the length $L_X$ and the width $L_Y$ being respectively larger and smaller than a lateral dimension $d_m$ of a resonant mode in a planar resonant cavity with infinite dimensions in the main plane, the lateral dimension $d_m$ being predefined according to a resonance wavelength of a reference resonant cavity ($20_i$) of the array (2), the thickness and the refractive index of its intermediate layer (22), and the coefficients of reflectivity of the two reflectors (21.1, 21.2).

10. The optoelectronic emitter (1) according to any one of claims 1 to 9, wherein the resonant cavities are made based on dielectric or III-V semiconductor compounds, and/or wherein the reflectors (21.1, 21.2) consist of Bragg mirrors.

11. The optoelectronic emitter (1) according to any one of claims 1 to 10, wherein the interlayer (22) of a central resonant cavity ($20_{ic}$) of the array (2) has a thickness equal to $k \times \lambda_{r(0)}/2n$, where k is an integer, $\lambda_{r(ic)}$ is the resonance wavelength of the central resonant cavity ($20_{ic}$), and n is the refractive index of the corresponding interlayer (22).

12. The optoelectronic emitter (1) according to any one of claims 1 to 11, having a scanning angular rate ($\partial_t\theta$) that is predefined according to a difference ($\Delta$) between the resonance frequencies of two adjacent resonant cavities ($20_i$), a resonance wavelength ($\lambda_{r(0)}$) of a central resonant cavity ($20_{ic}$) of the array (2), and a spatial arrangement step (P) of the resonant cavities ($20_i$) according to the second axis (Y) of the array.

13. The optoelectronic emitter (1) according to any one of claims 1 to 12, having a width ($L_\theta$) of an angular sector scanned by the main light beam which is predefined according to a resonance wavelength ($\lambda_{r(0)}$) of a central resonant cavity ($20_{ic}$) of the array (2) and a width ($L_Y$) of the resonant cavities ($20_i$) according to the second axis (Y) of the array.

14. The optoelectronic emitter (1) according to claim 13, having an angular width ($\delta\theta$) of the main light beam that is predefined according to the width of the angular sector ($L_\theta$) and a total number of the resonant cavities ($20_i$).

15. A method for manufacturing an optoelectronic emitter (1) according to any one of the preceding claims, wherein the variation of the resonance frequencies is induced by a variation of the thickness of the interlayer (22) of the resonant cavities ($20_i$) according to the second axis (Y) of the array (2), the method including a step of making a stack (4) intended to form the array (2) of resonant cavities ($20_i$), the stack (4) being made in a reactor (30), on a turntable (31), starting from a position that is laterally offset with respect to an axis of rotation of the turntable (31) relative to a reference position for which the thickness of the interlayer (22) has a uniform thickness.

**Fig.1**

**Fig.2A**

**Fig.2B**

Fig.3A

Fig.3B

Fig.3C

**Fig.4A**

**Fig.4B**

**Fig.4C**

**Fig.5A**

**Fig.5B**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2397882 A1

- US 5648786 A

**Littérature non-brevet citée dans la description**

- **BENISTY et al.** Impact of Planar Microcavity Effects on Light Extraction - Part I: Basic Concepts and Analytical Trends. *IEEE J. Quantum Electron.,* 1998, vol. 34, 1612-1631